# EUROPEAN PATENT SPECIFICATION

(11) **EP 1 415 417 B1**
(45) Date of publication and mention of the grant of the patent: **30.11.2005**
(21) Application number: 01991285.6
(22) Date of filing: 13.12.2001
(51) Int. Cl.: H04B 10/08, H04J 14/02, G02B 6/34

(54) **OPTICAL BAND SCANNING MONITOR SYSTEM AND METHOD**
ÜBERWACHUNGSVORRICHTUNG UND -VERFAHREN ZUM ABTASTEN EINES OPTISCHEN SPEKTRUMS
SYSTEME ET PROCEDE DE SURVEILLANCE PAR BALAYAGE DE BANDE OPTIQUE

(30) Priority: 20.12.2000 US 745157; 20.12.2000 US 742180
(43) Date of publication of application: 06.05.2004
(73) Proprietor: Axsun Technologies, Inc., Billerica, MA 01821 (US)
(72) Inventor: KORN, Jeffrey, A., Lexington, MA 02421 (US); ATIA, Walid, A., Lexington, MA 02420 (US)
(74) Representative: Reichert, Werner Franz
(86) International application number: PCT/US2001/049024
(87) International publication number: WO 2002/051043

(56) References cited:
- EP-A- 1 022 606
- WO-A-00/41351
- US-A- 5 940 205
- US-A- 5 943 147

## Description

### BACKGROUND OF THE INVENTION

Wavelength division multiplexing (WDM) systems typically comprise multiple, separately modulated, optical carrier signals, each one being assigned to a different channel slot, or frequency, in the WDM signal. The sources for the carriers can be located at a single head-end in long-haul applications or remote from each other, with the channels typically being accumulated onto a single fiber by multiplexers, in metro area network applications, for example. Along the fiber transmission link, the carriers can be regenerated or collectively amplified typically by gain fiber, semiconductor optical amplifiers (SOA), or doped waveguide devices. At the link termination, the carriers are usually demodulated or separately routed to new links.

Spectral information is required to confirm the proper operation of WDM systems. Generally, the types of information required are different depending on the type of system. Long haul systems are many times concerned with information such as the spectral shape of the channels and optical noise level. The spectral information is used to control the amplifiers and possibly correct for any gain tilt. Networks that possibly include add-drop or cross-connect devices are typically interested in channel slot occupancy information, *i*.*e*., whether or not a carrier signal is present in a given channel slot. They also typically monitor whether or not specific carriers are located to their assigned channel slot frequency and/or whether or not they are operating at the correct power level. All networks must have provisions for fault detection and characterization.

Patent application WO 00/41351 discloses "A Monitoring Of Signal Wavelengths In Optical Fibre''. A plurality of wavelengths travel in the optical fibre. A coupler is used to transfer a part to a narrowband filter (Fabry-Perot filter). By changing the control voltage the resonance frequency of the filter is changed. The light from the narrowband filter is directed to a detector. In the wavelength spectrum distinct power peaks can be seen at those wavelengths which are used by the channels of the optical fibre. In a memory one can store the information on the wavelength as a function of the control voltage. In order to assure faultless operation of the system it is essential to define the curve λ=f (c), wherein c is the filter control. If the dependence of the curve λ=f (c) is not known, the dependence curve λ=f (c) is assumed to be linear in the control range.

### SUMMARY OF THE INVENTION

Challenges exist in the design of monitoring devices that can track channel carrier signals populating the input and output optical links of WDM network devices. In dense WDM (DWDM) systems, the channel spacings can be tight, 100 GigaHertz (GHz) to 50 GHz, with systems requiring tighter spacings being proposed. Further, the number of potential channels on a link can be large. Observation of the ITU Grid suggests 100's of channels on a link in the L_{α}, C_{α}, and S_{α} bands, even if the 50 GHz offset of the L_{β}, C_{β}, and S_{β} band is ignored. Finally, improperly routed or dropped channel signals should be detected quickly. SONET specifications dictate that faults must be detected within 1 millisecond (msec).

The present invention relates to a scanning optical monitoring system and method. Specifically, a system and method are appropriate for high speed scanning of a WDM signal band. The system and method are able to quickly identify dropped channel signals or, more generally, discrepancies between the determined or detected channel inventory and a perpetual inventory for the WDM signal, which perpetual inventory specifies the channel signals that should be present in the WDM signal assuming proper operation of the network.

In general, according to one aspect, the invention relates to a scanning optical monitoring system. The system comprises a tunable optical filter that scans a passband across a signal band of a WDM signal to generate a filtered signal. A photodetector then generates an electrical signal in response to this filtered signal. A decision circuit compares the electrical signal to a threshold, and a controller, which is responsive to the decision circuit, inventories the channels in the WDM signal based on the information from the scan.

In a preferred embodiment, the tunable optical filter tunes across a signal band of the WDM signal in less than one millisecond. Specifically, the tunable optical filter begins and ends a complete scan in less than a millisecond allowing it to then be reset to immediately perform a subsequent scan.

However, in an alternative embodiment, more than one mode of the optical filter is used to scan the entire signal band of the WDM signal. In this case, one of the modes is tuned only across one-half, for example, of the signal band, with another mode handling the other half of the signal band.

In a current implementation, a low pass filter is used to filter the electronic signal from the photodetector prior to reception by the decision circuit. This removes any high frequency interference, allowing the controller to determine the existence, or not, of specific channels during the scan.

The controller determines the channel inventory by comparing an instantaneous power in the passband of the tunable filter, typically during the scan, to a threshold of the decision circuit to determine whether or not a channel exists at the current passband or channel slot. An inventory determined from the scan by the controller is then compared to perpetual inventory information that can be accessed by the controller. In this way, the controller can identify whether or not the WDM signal contains the expected channels.

According to the preferred embodiment, the tunable filter is a Fabry-Perot device, having an electrostatic drive cavity in which an electrostatic field is used to displace a flexible membrane. In one implementation, this cavity is sized such that a free spectral range of the tunable filter is greater than a bandwidth of a signal band of the WDM signal. In an alternative embodiment, the free spectral range is less than a bandwidth of the signal band. In this implementation, multiple modes of the tunable filter are used to simultaneously scan the entire signal band.

In one embodiment, a timing recovery circuit is used to control the sampling of the decision circuit by the controller. Such timing recovery circuits function as a software/hardware phase locked loop that locks onto the time series representing the channels in the WDM signal. Therefore, the location, or not, of a channel at a specific point in the scan can be determined.

According to an embodiment of the invention, a filter tuning voltage generator generates a tuning voltage to the optical tunable filter that improves the linearity of the tuning of the passband as a function of time over at least a portion of the scan of the signal band. Specifically, in one implementation, the tuning generator is triggered by the controller to in effect generate an arbitrary waveform. The waveform, however, is selected so that the passband center wavelength changes linearly with time over as least a portion of the scan. Such filter tuning voltage generators map an inverse of a wavelength tuning function of the optical tunable filter. For example, in one implementation, the generator is a look-up table. Alternatively, the filter tuning voltage generators map an inverse of a frequency tuning function of the optical tunable filter. For example, in one implementation, the generator is a look-up table.

In general, according to another aspect, the invention can also be characterized in the context of a method for analyzing a WDM signal. Such method comprises tuning a passband of a filter across a signal band of the WDM signal to generate a filtered signal. The filtered signal is then detected and a level of the detection signal is compared to a threshold. Finally, an instantaneous passband of the filter is compared to a level of the detection signal relative to the threshold to analyze a channel inventory in the WDM signal.

Another problem that arises in the context of controlling MEMS tunable filters, and more specifically, Fabry-Perot tunable filters concerns the control algorithms for these MEMS devices. Specifically, to increase the ease at which the results of a scan of the signal band of a WDM signal can be analyzed, it would be desirable if the change in the pass band of the tunable filter as a function of time were linear or near linear in frequency or wavelength.

In general, according to still another aspect, the present invention concerns an optical filter system. This filter system comprises a tunable optical filter that scans a passband across a signal band to generate a filtered signal. A filter tuning voltage generator generates a tuning voltage to the optical tunable filter. A photodetector generates an electrical signal in response to the filtered signal. Finally, a controller, that is responsive to the photodetector, triggers the filter tuning voltage generator.

The above and other features of the invention including various novel details of construction and combinations of parts, and other advantages, will now be more particularly described with reference to the accompanying drawings and pointed out in the claims. It will be understood that the particular method and device embodying the invention are shown by way of illustration and not as a limitation of the invention. The principles and features of this invention may be employed in various and numerous embodiments without departing from the scope of the invention.

### BRIEF DESCRIPTION OF THE DRAWINGS

In the accompanying drawings, reference characters refer to the same parts throughout the different views. The drawings are not necessarily to scale; emphasis has instead been placed upon illustrating the principles of the invention. Of the drawings:
Fig. 1 is a block diagram showing a scanning optical monitoring system of the present invention;
Fig. 2A is a plot of the passband center wavelength in nanometers as a function of tuning voltage in Volts for the Fabry-Perot tunable filter;
Fig. 2B is a plot of tuning voltage in Volts as a function of time in microseconds, for example, to yield the linearization of the present invention; and
Fig. 2C is a plot of passband in nanometers as a function of time in microseconds showing the resultant linearized passband tuning of the present invention.

### DETAILED DESCRIPTION OF THE PREFERRED EMBODIMENTS

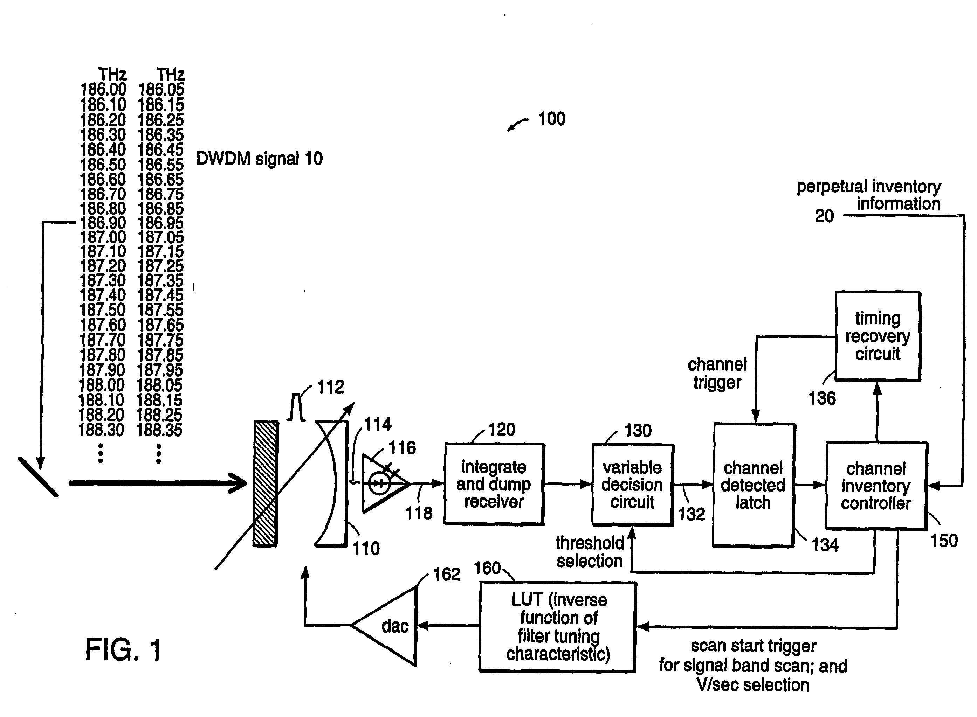

Fig. 1 is a schematic block diagram illustrating an optical band scanning monitoring system 100, which has been constructed according to the principles of the present invention.

Specifically, a WDM signal 10 is received by a tunable optical filter 110. In the current embodiment, this filter is an electrostatically deflected, microelectromechanical system (MEMS) Fabry-Perot device. It is preferably a high finesse device in which the passband is narrow to resolve the individual channels. In one implementation, the passband (FWHM) of the tunable filter 110 is less than 25 GHz, and preferably less then 5 GHz.

In one embodiment, the free spectral range of the filter 110 is greater than the signal band of the WDM signal. Thus, it is preferably greater than 100 nanometers (nm), preferably about 120 nm. In another embodiment, the free spectral range is set to be about one half of the signal band, with two orders of the filter being used to scan the signal band. In this second implementation, a WDM filter is used along with two electronic channels to allow for simultaneous scanning. This general configuration is illustrated in U.S. Pat. Appl. No. 09/648,263, filed on August 25, 2000, entitled Optical Channel Monitoring System with Simultaneous C-Band and L-Band Detection, by Flanders, *et al*.

The tunable filter 110 applies the graphically illustrated passband 112 to yield a filtered optical signal 114. This is detected by photodetector 116. This photodetector or transducer converts the optical signal to an electrical signal 118.

The electrical signal that is generated in response to the filtered optical signal is received by a low pass filter 120. In one implementation, the filter 120 is an integrate-and-dump receiver, which has a time constant that is a function of the scan speed of the passband and the bandwidth of the scanned channels.

The output from the low pass filter 120 is received by a decision circuit 130. This decision circuit preferably has a variable threshold. In its simplest implementation, circuit 130 is an operational amplifier that is logic high or logic low depending on whether or not the signal from the low pass filter 120 is above or below a threshold voltage that has been set by a digital to analog converter, for example. In the preferred embodiment of the system, the controller sets the level of the threshold. Further, by varying the threshold between scans, the controller can determine the power of the signals in the channel slots.

One advantage of the present invention is that it avoids the need for an analog to digital converter between the photodiode 116 and the controller 150. Scan times of less than 10 msec require high speed devices with limited sample arrays because of the time required to digitize and dump the acquired data to the controller 150.

In contrast, in one embodiment of the present invention, the scans are performed in less than millisecond. The threshold is changed between scans to thereby assess the power of individual channels by reference to other scans.

The decision circuit 130 produces a quasi-digital signal 132. It is a digital signal in the sense that it is either a logic high or logic low state. These state changes, however, may not be synchronized to any system clock of controller 150, for example. In one embodiment, signal 132 from the decision circuit 130 is received by a channel detect-latch 134. This latches the logic high or logic low signal 132 from the decision circuit 130 based upon a channel trigger from timing recovery circuit I36. This allows the controller 150 to sample the latched signal.

The controller 150 and recovery circuit 136 function as a phase locked loop that triggers the latch 134 when the passband of the tunable filter 110 is coincident with a channel slot in the signal band of the WDM signal 10. The timing recovery circuit 136 phase-locks on the time series generated by the scanning across the channel slots in the WDM signal 10.

The controller 150 by sampling the state of the channel detect latch 134 as the passband passes over channels in signal 10 is able to inventory the populated wavelength slots. As a result, it is able to determine which channels in the ITU grid contain actual optical carrier signals by reference to whether or not the power is above or below the applied threshold. This actual accumulated inventory information of the WDM signal 10 is then compared to perpetual inventory information 20 received from a system controller or host. This perpetual inventory information is the inventory that the controller 150 should have found in the DWDM signal, assuming the proper operation of upstream transmitting devices. In this way, the controller 150 can identify faults when channels are present that should not be present by reference to the perpetual inventory information and contrastingly, when channels are not present but are indicated as being present by the perpetual inventory information.

According to another aspect of the invention, the system 100 further comprises a filter tuning voltage generator 160. This generator 160 receives a scanstart trigger and/or voltage per second selection signal from the controller 150. Specifically, it generates through, preferably, a digital-to-analog converter 162 the tuning voltage to the tunable filter 110. Specifically, this tuning voltage is used to generate an electrostatic drive voltage in the tunable filter that causes the deflection of an optical membrane to yield the Fabry-Perot tunable cavity filter functionality.

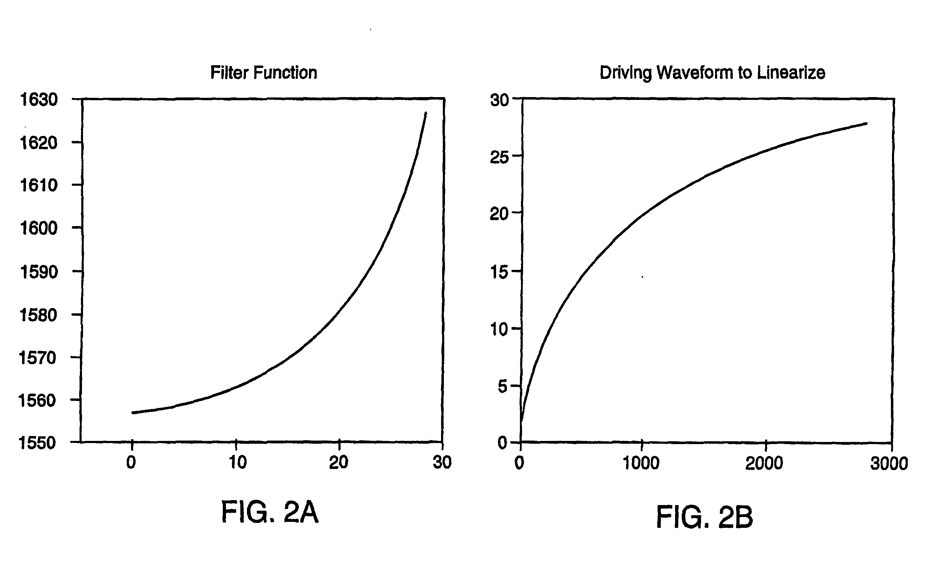

In a preferred embodiment, the voltage generator 160 generates a tuning voltage to improve a linearization of the tuning of the passband as a function of time over at least a portion of a scan of the signal band. This functionality is illustrated by reference to Figs. 2A-2C.

By reference to Fig. 2A, typically, there is a non-linear relationship between the tuning voltage on the horizontal axis and the passband center frequency of the tunable filter 110. This is due to the electrostatic characteristics of the drive cavity of these tunable filters and the membrane's mechanical characteristics. As a result, incremental changes in the tuning voltage in the early part of the scans, such as around 1550 to 1560 nanometers (nm) yield small shifts in the passband center. In contrast, near the end of the scan as, for example, between 1620 and 1630 nm, relatively small changes in voltage yield large jumps in the passband center.

According to one aspect, the tuning voltage generator 160 stores an inverse tuning characteristic as illustrated in Fig. 2B. Specifically, this function has the effect of yielding large changes in voltage as a function of time in an early part of the scan and relatively small changes in the voltage as a function of time during the later part of the scan. As a result, when a trigger signal is applied to the tuning voltage generator, the stored function, as illustrated in Fig. 2B is applied to the filter 110.

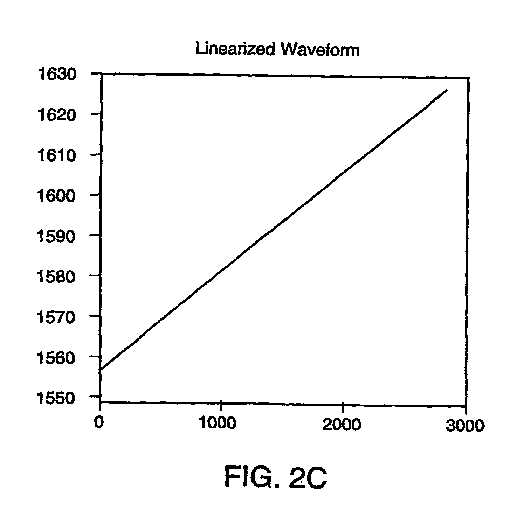

As shown by Fig. 2C, when the inverse tuning characteristic is applied to the tunable filter, a linear frequency tuning relationship results, *i.e.*, the tuning of the passband is linear with time. In one implementation, the tuning is linear with wavelength in time, as illustrated. Alternatively, the tuning is linear with frequency in time. As a result, this allows the time recovery circuit 136 to expect a consistent or near consistent channel-to-channel delay across all or part of the scan allowing it to phase lock onto the power peak series as if it were a clock series to thereby control the latch 134. Further, the controller and recovery circuit are able to identify whether or not a slot is populated by reference to the delay from the generation of the start trigger to the inverse function generator 160.

Generally, whether the filter is linearized in frequency or wavelength depends on the application. Modern WDM systems specify channel spacings in frequency, whereas spectral analysis typically bases analysis in wavelength.

Moreover, this linearization function is useful in other embodiments, such as where an analog to digital converter is used to sample the response of the detector 116. These A/D converters usually have a fixed sampling rate. The linearization enables the A/D converter to sample such that the spectral distance, measured in wavelength or frequency, between successive samples, *i*.*e*., each digitization of the voltage generated by detector 116, is the same across the scan of the band of interest.

## Claims

1. An optical filter system (100), comprising:
a tunable MEMS optical filter (110) for scaning a passband (112) across a signal band to generate a filtered signal (114);
a photo detector (116) for generating an electrical signal (118) in response to the filtered signal (114); **characterized by**:
a filter tuning voltage generator (160) for generating atuning voltage to the optical tunable filter (110) that improves a linearization of the tuning of the pass band (112) as a function of time over at least a portion of the scan of the signal band; and
a controller (150) that is adapted to be responsive to the photodetector (116) and to trigger the filter tuning voltage generator (160).

2. The optical filter system (100) as claimed in claim 1, wherein the filter tuning voltage generator (160) is for generating a time varying tuning voltage to the optical tunable filter (110) that linearizes the tuning of the pass band (112) as a function of time over at least a portion of the scan of the signal band.

3. The optical filter system (100) as claimed in claim 1, further comprising an electronic filter (120) and a decision circuit (130), wherein the electronic filter (120) is provided prior to the decision circuit (130), wherein the electronic filter (120) is for low pass filtering the electronic signal (118) from the photodetector (116) prior to reception by the decision circuit (130).

4. The optical filter system (100) as claimed in claim 1, wherein the controller (150) is for mapping a tuning voltage as a function of delay from a generation of a trigger to the filter tuning voltage generator (160).

5. The optical filter system (100) as claimed in claim 1, wherein the filter tuning voltage generator (160) comprises a look-up table.

6. An optical filter system (100) tuning process, comprising:
a tunable optical filter (110) scanning a pass band (112) across a signal band to generate a filtered signal (114); **characterized by**
generating a non-linear tuning voltage as a function of time;
applying the tuning voltage to tunable optical filter (110); and
detecting a filtered signal (114) from the tunable optical filter (110).

7. The tuning process as claimed in claim 6, wherein a resulting tuning of the pass band (112) as a function of time has improved linearization because of the non-linear tuning voltage.

8. The tuning process as claimed in claim 6, wherein the pass band (112) of the tunable filter (110) changes linearly with time at least over a portion of the scan of the signal band.

9. The tuning process as claimed in claim 6, wherein the filter (110) is tuned across the signal band in less than 1 millisecond.

10. The tuning process as claimed in claim 6, wherein a controller (150) maps the tuning voltage as a function of delay from a generation of a trigger to a filter tuning voltage generator (160) that is generating the non-linear tuning voltage as a function of time.

11. The tuning process as claimed in claim 10, wherein the filter tuning voltage generator (160) comprises a look-up table.

## Patentansprüche

1. Ein optisches Filtersystem (100) umfasst:
einen einstellbaren optischen MEMS Filter (110), der ein Durchlassband (112) über einem Signalband abtastet, um ein gefiltertes Signal (114) zu erzeugen;
einen Fotodetektor (116), der ein elektrisches Signal (118) als Antwort auf das gefilterte Signal (114) erzeugt; **dadurch gekennzeichnet, dass**:
ein Spannungsgenerator (160) zur Einstellung des Filters eine einstellbare Spannung für den einstellbaren optischen Filter (110) erzeugt, wodurch eine Linearisierung der Einstellung des Durchlassbandes (112) als Funktion der Zeit über mindestens einen Teil der Abtastung des Signalbandes verbessert ist; und
ein Überwachungsmittel (150) derart ausgestaltet ist, dass es auf den Fotodetektor (116) reagiert und den Spannungsgenerator (160) zur Einstellung des Filters steuert.

2. Optisches Filtersystem (140) gemäß Anspruch 1, wobei der Spannungsgenerator (160) zur Einstellung des Filters eine sich zeitlich ändernde einstellbare Spannung für den einstellbaren optischen Filter (110) erzeugt, wodurch die Einstellung des Durchlassbandes (112) als Funktion der Zeit über mindestens einen Teil der Abtastung des Signalbandes linearisiert ist.

3. Optisches Filtersystem (100) gemäß Anspruch 1, das des Weiteren einen elektronischen Filter (120) und einen Steuerschaltkreis (130) umfasst, wobei der elektronische Filter (120) vor dem Steuerschaltkreis (130) angebracht ist, und wobei der elektronische Filter (120) das elektrische Signal (118) aus dem Fotodetektor (116) mit einem Tiefpassfilter filtert, bevor es in den Steuerschaltkreis (130) gelangt.

4. Optisches Filtersystem (100) gemäß Anspruch 1, wobei das Überwachungsmittel (150) eine einstellbare Spannung als Funktion der Verzögerungszeit erzeugt, die durch den Auslöseimpuls zu dem Spannungsgenerator (160) entsteht.

5. Optisches Filtersystem (100) gemäß Anspruch 1, wobei der Spannungsgenerator (160) eine Anzeigetafel umfasst.

6. Ein Einstellverfahren für ein optisches Filtersystem (100) umfasst:
einen einstellbaren optischen Filter (110), der ein Durchlassband (112) über einem Signalband abtastet, um ein gefiltertes Signal (114) zu erzeugen; **dadurch gekennzeichnet, dass**:
eine nichtlineare einstellbare Spannung als Funktion über die Zeit erzeugt wird;
die einstellbare Spannung an den einstellbaren optischen Filter (110) gelegt wird; und
ein gefiltertes Signal (114) aus dem einstellbaren optischen Filter (110) ermittelt wird.

7. Einstellverfahren gemäß Anspruch 6, wobei eine resultierende Einstellung des Durchlassbandes (112) als Funktion über die Zeit durch die nichtlineare einstellbare Spannung eine verbesserte Linearisierung erfährt.

8. Einstellverfahren gemäß Anspruch 6, wobei das Durchlassband (112) des einstellbaren optischen Filters (110) sich zeitlich linear über mindestens einen Teil der Abtastung des Signalbandes verändert.

9. Einstellverfahren gemäß Anspruch 6, wobei der einstellbare optische Filter (110) über das Signalband in weniger als einer Millisekunde eingestellt wird.

10. Einstellverfahren gemäß Anspruch 6, wobei ein Überwachungsmittel (150) eine einstellbare Spannung als Funktion der Verzögerungszeit erzeugt, die durch den Auslöseimpuls zu dem Spannungsgenerator (160) entsteht, der die nichtlineare einstellbare Spannung als Funktion über die Zeit erzeugt.

11. Einstellverfahren gemäß Anspruch 10, wobei der Spannungsgenerator (160) eine Nachchlagetabelle umfasst.

## Revendications

1. Système de filtre optique (100), comprenant :
un filtre optique accordable MEMS (110) pour le balayage d'une bande passante (112) sur toute une bande de signal afin de générer un signal filtré (114) ;
un photodétecteur (116) pour la génération d'un signal électrique (118) en réponse au signal filtré (114) ; **caractérisé par** :
un générateur de tension (160) d'accord de filtre pour la génération d'une tension d'accord pour le filtre optique accordable (110) qui améliore une linéarisation de l'accord de la bande passante (112) en fonction du temps pendant au moins une partie du balayage de la bande de signal ; et
un contrôleur (150) qui est adapté de manière à être réceptif au photodétecteur (116) et à déclencher le générateur (160) de tension d'accord de filtre.

2. Système de filtre optique (100) selon la revendication 1, dans lequel le générateur (160) de tension d'accord de filtre est destiné à générer une tension d'accord variable dans le temps pour le filtre optique accordable (110) qui linéarise l'accord de la bande passante (112) en fonction du temps pendant au moins une partie du balayage de la bande de signal.

3. Système de filtre optique (100) selon la revendication 1, comprenant en outre un filtre électronique (120) et un circuit de décision (130), dans lequel le filtre électronique (120) est installé en amont du circuit de décision (130), dans lequel le filtre électronique (120) est destiné au filtrage passe-bas du signal électronique (118) venant du photodétecteur (116) avant la réception par le circuit de décision (130).

4. Système de filtre optique (100) selon la revendication 1, dans lequel le contrôleur (150) est destiné au mappage d'une tension d'accord en fonction du retard d'une génération d'un signal de délenchement du générateur (160) de tension d'accord de filtre.

5. Système de filtre optique (100) selon la revendication 1, dans lequel le générateur (160) de tension d'accord de filtre comprend une table de consultation.

6. Procédé d'accord pour système de filtre optique (100), comprenant :
un filtre optique (110) accordable qui balaie une bande passante (112) sur toute une bande de signal afin de générer un signal filtré (114) ; **caractérisé par**
la génération d'une, tension d'accord non linéaire en fonction du temps ;
l'application de la tension d'accord au filtre optique accordable (110) ; et
la détection d'un signal filtré (114) venant du filtre optique accordable (110).

7. Procédé d'accord selon la revendication 6, dans lequel un accord résultant de la bande passante (112) en fonction du temps a amélioré la linéarisation à cause de la tension d'accord non linéaire.

8. Procédé d'accord selon la revendication 6, dans lequel la bande passante (112) du filtre accordable (110) change linéairement avec le temps au moins pendant une partie du balayage de la bande de signal.

9. Procédé d'accord selon la revendication 6, dans lequel le filtre (110) est accordé sur toute la bande de signal en moins d'1 milliseconde.

10. Procédé d'accord selon la revendication 6, dans lequel le contrôleur (150) mappe la tension d'accord en fonction du retard d'une génération d'un signal de délenchement d'un générateur (160) de tension d'accord de filtre qui génère la tension d'accord non linéaire en fonction du temps.

11. Procédé d'accord selon la revendication 10, dans lequel le générateur (160) de tension d'accord de filtre comprend une table de consultation.
